# EUROPEAN PATENT APPLICATION

(11) **EP 4 292 731 A1**
(43) Date of publication of application: **20.12.2023**
(21) Application number: 22179509.9
(22) Date of filing: 17.06.2022
(51) Int. Cl.: B22F 7/00, B32B 15/00, B22F 3/22, B22F 7/02, H01M 8/00, B22F 1/052, B22F 7/04

(54) **METHOD FOR PRODUCING LAYERED SHEET STRUCTURES FROM TITANIUM OR TITANIUM ALLOYS FOR USE IN ELECTRODES OF PEM-TYPE ELECTROLYZERS AND/OR FUEL CELLS**

(71) Applicant: Element 22 GmbH, 24148 Kiel (DE)
(72) Inventor: Scharvogel, Matthias, 20253 Hamburg (DE); Schaper, Johannes Geronimo, 24867 Dannewerk (DE); Winkelmüller, Wendelin, 24106 Kiel (DE); Gerdts, Florian, 24106 Kiel (DE); Lang, Markus, 24145 Kiel (DE)
(74) Representative: Raffay & Fleck

(57) **Abstract**

A method for producing layered sheet structures from titanium or titanium alloy metal for use in or as electrodes of PEM-type electrolyzers and/or fuel cells comprising the following steps:
a) providing a first sheet-like green part that is formed from a powder of titanium metal, titanium alloy metal and/or titanium hydride and from at least one binder material by selectively positioning material and leaving voids or open spaces therebetween, said first sheet-like green part being a green part of a first metal sheet layer,
or providing a first metal sheet layer comprising a metallic frame structure including voids or open spaces,
b) providing a second sheet-like green part that is formed from a powder of titanium metal, titanium alloy metal and/or titanium hydride and from at least one binder material, said second sheet-like green part being a green part of a second, porous metal sheet layer,
or providing a second metal sheet layer in the form of a porous metal sheet layer,
c) forming a stack comprising
i. the first sheet-like green part and the second sheet-like green part or
ii. the first sheet-like green part and the second metal sheet or
iii. the first metal sheet and the second sheet-like green part,

d) debinding the green part or green parts and sintering the stack to densify the green part or green parts contained therein and to simultaneously bond the metal sheet layers of the stack.

## Description

The present invention relates to a method for producing layered sheet structures from titanium or titanium alloys for use in electrodes of PEM-type electrolyzers and/or fuel cells.

Hydrogen, in particular so called "green hydrogen", is of rapidly growing importance and of high interest as one of the key factors in overcoming the dependency from fossil energy resources. Green hydrogen is not only considered a favourable option for storing and transporting energy gained from sustainable energies, such as solar energy or wind energy, but is also seen to be an important energy carrier medium for use in industrial processes such as steel production as replacement for natural gas or coal that is currently widely used.

In 2020, the worldwide hydrogen demand was about 90 Mt, with more than 70 Mt used as pure hydrogen and less than 20 Mt mixed with carbon-containing gases in methanol production and steel manufacturing. Almost all this demand was for refining and industrial uses. Currently, hydrogen is still produced mainly from fossil fuels, resulting in about 900 Mt of CO₂ emissions per year. In view of reducing the carbon footprint, it is therefore important to develop and establish technologies which allow for producing green hydrogen.

For example, one way to produce environmentally friendly hydrogen is PEM electrolysis. One component of a PEM electrolyzer is a proton exchange membrane (PEM), which is contacted on both sides by porous electrodes coated with a catalytic layer, e.g., made of platinum or iridium. Inside a PEM electrolyzer, two separate water circuits are realized, namely an anode-side water circuit and a cathode-side water circuit. An external voltage is applied to the electrodes and water is supplied to the anode side of the electrolyzer. Through the catalytic effect, e.g., of the platinum, the water on the anode side is split. This produces oxygen, free electrons and positively-charged protons (hydrogen ions H⁺). The protons diffuse through the proton exchange membrane to the cathode side, where they combine with the electrons from the external circuit to form hydrogen molecules H2.

Individual cells may be combined into assemblies, to provide the efficacy required.

The operation environment and the requirements for its components such as bipolar plates, base plates, supporting layer and porous metal layer are determined by the properties of electrolyte membrane and the electrolyzer cell/stack operation conditions. Hence, the following example illustrates embodiments of the invention but the invention is not limited to these embodiments.

PEM electrolyzers typically operate at high pressure, either on cathode (hydrogen electrode for hydrogen evolution reactions) or on anode (oxygen electrode for oxygen evolution reactions). In reversible fuel cell systems, both anode and cathode chambers are at high pressure. Therefore, all components, including bipolar plates or base plates, have to have sufficient mechanical strength to withhold the pressure. In particular, in cells that may be exposed to high differential pressures, the low-pressure side of the membrane must be supported by a relatively incompressible supporting layer.

The proton exchange membrane is sandwiched between two porous transport layers (PTL), in order to transport the reactant, e.g. water, onto the catalyzers and onto the PEM and to transport the reaction products away again. Such transport is basically achieved by capillary function of the material featuring open pores of small dimensions. The fraction of pores in this layer might typically be in the range of 40 ± 15 vol.-%, in particular 40 ± 10 vol.-%. The size of such pores might range from 5 *µ*m to 500 *µ*m, in particular from 5 *µ*m to 200 *µ*m, more particular from 5 *µ*m to 100 *µ*m. Furthermore, the porous transport layers also have an electrical function, i.e., to lead a current as large as possible onto the catalyzers on the cell membrane over a large surface. Moreover, the surface of the PTL has to be very smooth in order to avoid damage of the catalyst layer or membrane during operation. This is particularly relevant if the membrane is to be made with a low thickness which is aimed for in order to save costs as well as increase effectivity of the device.

The support layer to which the PTL is attached and connected in both ways, mechanically and electrically, needs to be sufficiently strong and rigid to bear the loads and to support the porous layer for giving mechanical strength. Yet, the support layer must also provide for a transport of water to the PTL for moving the water further on towards and into contact with the PEM. Also, the support layer shall serve to transport gas evolving from the reaction, in particular oxygen, which gas might even be present in the form of bubbles and must be transported off the PEM and the surrounding areas very efficiently in order to avoid any negative impact on the dissociation rate at the PEM. In present arrangements the supporting layers feature openings or channels for water transport with dimensions in the range of 0.1 to 5.0 mm. The fraction of pores in this layer might be in the range of 70 ± 10 vol.-%. Water migrates through the structure of the support layer by means of flow mechanisms in contrast to the migration through the PTL by capillary function.

For electrical reasons, the electrically conductive surface contacting the PEM, PTL as well as of the supporting structure, and the supporting layer should be as dense as possible in order to ensure an intensive and uniform flow of current over an available surface area. With regard to the reactant feed and the reaction product discharge, a structure having open pores would be useful in order to allow for reactant flow through the respective products with as little energy effort as possible. On the other hand, such porous transport layers should be as thin as possible. This allows for a large number of electrochemical cells to be arranged in a cell stack of a given stack height. Further, such design enhances the efficiency of the device as the liquid, typically water, as well as the current need to pass less distance towards the PEM.

In order to fulfil the aforementioned demands, for example, it is known to support a thin porous layer that contacts the PEM by sheets of expanded metals or meshes. Such expanded metals or meshes are in the form of metal sheets which have been cut and stretched to form a regular pattern of metal mesh-like material. Stacks of expanded metal sheets with varying mesh size are typically employed. A common disadvantage of stacks of expanded metal sheets are their poorly defined contact points, even if the expanded metal sheets are welded together in order to produce the stack. Such poorly defined contact points are unfavorable as they, for example, result in unreliable electrical conductivity.

Alternatively, non-wovens, felts or fabrics of a small thickness may be used which are formed from titanium fibers and to then provide these with a porous titanium layer.

US 2021/0164109 A1 describes a method for manufacturing a porous transport layer of an electrochemical cell. The method comprises mixing a metal powder with a binder and a subsequent shaping-out into a foil. The foil is brought to bear on a porous metal layer. The binder is subsequently removed and the remaining brown part layer is sintered to the porous metal layer, so that a porous transport layer is formed. Said porous transport layer includes a porous metal layer with a microporous metal layer which is deposited thereon.

There is an ongoing need for devices having a structure that is further optimized with regard to current flow, reactant flow and resistance to pressure differentials, and which are produced in an economical way.

The object of the present invention is solved by a method for producing layered sheet structures from titanium or titanium alloy metal for use in or as electrodes of PEM-type electrolyzers and/or fuel cells comprising the following steps:
a) providing a first sheet-like green part that is formed from a powder of titanium metal, titanium alloy metal and/or titanium hydride and from at least one binder material by selectively positioning material and leaving voids or open spaces therebetween, said first sheet-like green part being a green part of a first metal sheet layer,
   or providing a first metal sheet layer comprising a metallic frame structure including voids or open spaces,
b) providing a second sheet-like green part that is formed from a powder of titanium metal, titanium alloy metal and/or titanium hydride and from at least one binder material, said second sheet-like green part being a green part of a second, porous metal sheet layer,
   or providing a second metal sheet layer in the form of a porous metal sheet layer,
c) forming a stack comprising
   i. the first sheet-like green part and the second sheet-like green part or
   ii. the first sheet-like green part and the second metal sheet or
   iii. the first metal sheet and the second sheet-like green part,
d) debinding the green part or green parts and sintering the stack to densify the green part or green parts contained therein and to simultaneously bond the metal sheet layers of the stack.

By performing such a method for producing layered sheet structures from titanium or titanium alloy metal for use in or as electrodes of PEM-type electrolyzers and/or fuel cells the first metal sheet layer that comprises titanium or a titanium alloy is made with very defined openings, voids or channel-like structures. This may be achieved by known methods when forming the metal sheet layer in conventional way, e.g., by forming it as expanded metal layer or wire mesh. It can also be achieved, when the first metal sheet layer is formed by means of powder metallurgical methods, resulting from selectively positioning of the material. Such voids, open spaces, openings or channels, which may in particular run in the plane of the fist metal sheet layer, then form defined macroscopic structures for allowing a flowing water transport therethrough, whilst the titanium or titanium alloy sections may be construed sufficiently stiff and rigid in order to support the second metal sheet layer which may form the PTL with microporosity for capillary transport of the water. So, the first metal layer structure may form the supporting layer of the stacked arrangement, supporting the second metal sheet layer which may form the PTL.

Further, by performing both, the debinding and densifying of the one or more green parts involved as well as bonding the parts together in the sintering step, there is achieved a particularly good bonding with both, excellent mechanical bonding as well as electrical contact over basically the entire contact area of the first and second metal sheet layers. This allows for a particularly good electric contacting of the second metal sheet layer (forming the PTL) through the first metal sheet layer (forming the supporting layer) and thus an improved efficacy of the PEM-electrolyzer or PEM fuel cell that includes the layered sheet structure obtained with the claimed method.

The powder particles for a powder metallurgical forming of the metal sheet parts or the other metal parts mentioned and described herein may be titanium particles, titanium alloy particles and/or titanium hydride particles.

If metal sheet layers are to be used for forming the stack, these may be formed by means of conventional methods, such as calendaring or the like. Yet such metal sheet layers may also be formed from green parts built with metal powder and binder material and further processed by debinding and densifying in a sintering step.

When performing the method as disclosed herein, it is particularly preferred to form the individual sheets or layers in first and separate processes or process steps and to then stack the pre-formed layers or sheets in another process step to form the stack that is to undergo the subsequent sintering step that also bonds the separately formed structures.

The layered sheet structure so produced may form an electrode useful in an electrolyzer, preferably a PEM-type electrolyzer, or in a PEM-type fuel cell, additionally comprising a base plate made from titanium or a titanium alloy facing the surface of the supporting layer opposite the porous metal layer. Said base plate may be a bipolar plate or may also be an additional element in the structure for coupling the first metal sheet layer to a bipolar plate via the base plate.

In order to add such a base plate to the stack when producing the layered sheet structure according to this aspect of the invention, the method additionally may comprise:
Providing a, preferably fluid-tight, titanium or titanium alloy base plate or a third sheet-like green part, said third sheet-like green part being formed from a powder of titanium metal, titanium alloy metal and/or titanium hydride and from at least one binder material and being a green part of the titanium or titanium alloy base plate, and, when forming the stack in step c), arranging the base plate or the third sheet-like green part in contact with the surface of the first sheet-like green part or of the first metal sheet layer and opposite the second sheet-like green part or the second metal sheet layer.

In order to enhance the bonding achieved during the sintering step, it is possible to, when forming the stack in step c), apply a paste-like material to at least a part of at least one joining surface of one of the sheet-like green parts and/or the metal sheet layers involved, said paste-like material comprising a powder of titanium metal, titanium alloy metal and/or titanium hydride and further comprising at least one binder material. Such paste-like material may advantageously fill some gaps that may occur between the parts to be bonded and may thus improve the firm bonding over an extended surface area for improved mechanical and also electrical contact between the layers so bonded. In this regard, it is in particular possible to apply the paste-like material selectively to such areas where a firm and close bonding is intended to be achieved. The use of such paste-like material is of particular benefit when metal sheet layers are involved in the stack that have either been produced by other means, but powder metallurgical processes, or that have been produced by powder metallurgic processes, but have been fully densified in a previously executed sintering step.

The paste-like material may principally contain the powder particles which form metal structures of the same kind of material as the material of which the various green parts that have been mentioned so far or that are mentioned hereafter are formed. In some embodiments, however, it may be preferable to use a paste-like material containing predominantly or solely titanium hydride powder particles. Yet, also other kinds of powder particles, such as particles from titanium or a titanium alloy may be used. Preferably for the paste-like material fine powder with a ratio of surface to volume ≥ 0.1 *µ*m⁻¹ may be used. This may be achieved by using small sized powder particles, but also by using particles of bigger size which have, e.g., a sponge like structure and by this means a large surface area. For the paste-like material fine powder having a particle size d₉₀ of ≤ 50 *µ*m, preferably ≤ 30 *µ*m, in particular of ≤ 25 *µ*m may be used. A choice according to the before mentioned options leads to comparably large surface areas exposed by the powder which enhances the formation of coherent material bridges between the particles and the material of the adjacent layers during sintering, in particular in the initial stage of the sintering. This leads to formation of strong and solid bonds.

The particle size of the powder particles for forming the green parts that are involved does not necessarily need to be as small. For the material for forming the green parts, powder particles with a particle size d₉₀ of ≤ 1 50 *µ*m, preferably ≤ 90 *µ*m, in particular of ≤ 45 *µ*m may be used.

For forming the first sheet-like green part for the first metal sheet layer in order to form selective voids and open spaces one may even choose comparably larger particles in a range of d₉₀ ≥ 100 *µ*m, e.g., in the range of 150 *µ*m ≥ d₉₀ ≥ 200 *µ*m. This may allow to form between the particles larger scale voids and channels when densifying the first sheet-like green part to form the first metal sheet layer. Such voids and channels may then allow fluid to flow therethrough. Yet, the voids or channels may also be formed by using similar or the same powder material as for the other layers and by simply placing the powder material in a selective manner so to arrange for defined geometrical structures.

The powder particles used for making the green parts that are involved as well as the powder particles used for making the paste-like material, may principally have any suitable form. They may be spherical, yet may also be non-spherical, such as claw-, lug- or bracket-like or even sponge-like, i.e., porous themselves. In particular sponge-like particles may be useful in forming the porous second metal sheet layer as such particles bring in some porosity by their nature.

The present invention includes embodiments with additive manufacture of a first sheet-like green part of the first metal sheet layer from a sinterable powder and a binder. The powder is one of titanium powder, titanium alloy powder titanium hydride powder or a combination of such powders. This along with the selectively positioning of the material allows manufacture of a supporting layer with a controlled architecture meaning that the structure in the layer or at least a portion thereof is as designed rather than random. The first sheet-like green part may preferably be formed by means of additive manufacturing, in particular by a 3-dimensional printing technology.

Hence, control of properties at different locations within the first metal sheet layer, to produce for example passageways or channels with a gradient of the opening ratio through the layer is made possible. The architecture may also be ordered meaning that it is also regular or periodic at least in one direction through at least part of the layer, or having a predetermined orientation relative to the external shape of the layer. The designed structure can refer to the channels as well as to the integral structure of the first metal sheet layer. The channels or voids so formed may be of any suitable kind or form. There may, e.g., formed in the plane of the first metal sheet layer branching channels, or channels with nodes to which several of channel-like structures meeting and merging there. In order to adjust desired properties of the first metal sheet layer in a direction transvers to the sheet layer's plane, the first sheet-like green part may be formed with a gradient of diverging powder particle sizes in said direction. Also, by such means and measures properties of the first metal sheet layer can be adjusted according to the demands of the particular design of the PEM-type electrolyzer or fuel cell for which the layered sheet structured produced according the method disclosed herein is foreseen to be used.

Moreover, control of properties at different locations within the layer, to produce for example the integral structure or a finite element method (FEM) optimized model of the first metal sheet layer having porous portions and/or a non-uniform controlled porous architecture is made possible. This allows an optimization of current flow and of mass transport in the in-plane direction in addition to that in the through-plane direction.

The method further enables a first metal sheet layer, serving as supporting layer, with a controlled porous architecture. Hence, control of properties at different locations within the element, to produce for example regions of different porosity through the element may be a desired feature. The porosity may also be ordered meaning that it is also regular or periodic at least in one direction if not in two, three or more directions through at least part of the element, or having a predetermined orientation relative to the external shape of the element. Generally, the porosity is interconnected meaning that at least a major fraction or substantially all open pores or voids intersect with at least some other open pores or voids which extend in a different direction. This can optimize the flow of the reactants as well as the reaction products through the first metal sheet layer and helps to also optimize the mechanical stability of the supporting layer.

Methods have been known comprising the steps of computationally designing a product including a controlled fluid permeable architecture, and producing a three-dimensional positive model of the product from an electronic or computerized data file using additive manufacturing, also referred to as layered manufacturing or 3-dimensional printing technology.

The first metal sheet layer, forming the supporting layer, serves various functions. First, said layer must ensure reactant feed and the reaction product discharge to and from the PEM via the second metal sheet layer which forms the porous metal layer. Second, the fist metal sheet layer serves to mechanically support the second metal sheet layer. Third, in the electrode of the PEM-type device, the first metal sheet layer connects the second metal sheet layer and the base plate, which particularly may be the bipolar plate, mechanically and electrically.

The present method allows for a first metal sheet layer, forming the supporting layer, that has a non-uniform opening ratio in a direction perpendicular to the plane of said layer. The opening ratio is defined as the ratio of the open area of a cross-section of the layer to the total area of the cross-section. Frequently, the opening ratio at the surface facing the second metal sheet layer is smaller than the opening ratio at a distance from the second metal sheet layer. This allows for better support of the second metal layer which forms the PTL and better electrical dissipation of the electric current away from the porous second metal sheet layer. This also improves the force distribution when pressure is exerted to the second metal sheet layer by the PEM. This is important as adjusting a higher pressure in the device leads to a higher yield in particular of a system that includes further use of the hydrogen obtained under high pressure.

The method further enables a first metal sheet layer which is substantially ordered in one direction or two directions parallel to its plane by at least a part of the layer, meaning that it is substantially regular or periodic in one direction or two directions parallel to the plane of the said layer, but the order may have a gradient in one direction or two directions parallel to the plane of the first metal sheet layer. In other words, the structural elements that are repeatedly arranged and that define the ordered structure may vary slightly among each other to form a gradient in at least one direction of the first metal sheet layer. This can assist in optimizing the flow of the reactants and reaction products through the first metal sheet layer, taking into account the fact that, for example, in an electrolyzer the reactant is a liquid and the reaction products form a liquid-gas mixture.

In an embodiment, the first metal sheet layer comprises passageways running in the plane of said layer and being open towards the porous second metal sheet layer. Hence, the passageways allow for an efficient flow of reactants and gases, which are further distributed through or collected and withdrawn from the first metal sheet layer. The passageways may be parallel such as a series of corrugations or in a serpentine pattern.

In an embodiment, the first metal sheet layer may have a generally grid-like structure with grid webs and grid nodes. The grid webs form passageways. The grid webs may be tilted with respect to the plane of the first metal sheet layer to form passageways. The passageways allow for a flow of reactants and gases through the first metal sheet layer in a direction parallel to the plane of the said layer.

In order to enhance the mechanical contact and electrical conductivity as well as a load-optimized design of the first metal sheet layer, forming the supporting layer, to the porous second metal sheet layer, the grid may have conical or trumpet-shaped widenings (flare portion) at the points of contact with the second metal sheet layer where the layers are bonded in a separate step. In some embodiments, the points of contact with the second metal sheet layer coincide with grid nodes. To ensure reactant feed and the reaction product discharge the points of contact might have a higher porosity then the rest of the first metal sheet layer.

By "green part" is meant a bound shaped part comprised of a sinterable powder of titanium, titanium alloy and/or titanium hydride along with an organic binder. In a post-processing debinding step, the binder is removed and the sinterable material powder sintered. Sintering corresponds to the thermal consolidation of the metal material. It is usually accompanied by a decrease in porosity and dimensional shrinkage.

"Bonding" simultaneously with the sintering means the thermal joining or laminating of layers, optionally with the application of a joining force. This creates a strong bond at the interface between so bonded portions.

Generally, the thickness of the second metal sheet layer may be in the range of from 0.01 to 2 mm, preferably 0.05 to 1 mm, more preferably 0.08 to 0.7 mm, most preferably 0.1 to 0.5 mm.

Suitably, the porosity of the porous second metal sheet layer may be in the range of from 40 to 95 vol.-%, preferably 40 to 70 vol.-%, more preferably 45 to 65 vol.-%, most preferably 50 to 60 vol.-%. The pores are micropores and are interconnected and have an open porosity. The porosity can be measured, e.g., by computed tomography (CT) analysis.

Generally, the thickness of the first second metal sheet layer is in the range of from 0.5 to 5 mm, preferably 0.8 to 4 mm, more preferably 1 to 3 mm, most preferably 1.5 to 2.5 mm.

Generally, the thickness of the porous second metal sheet layer is in the range of from 0.05 to 0.5 mm, preferably 0.05 to 0.3 mm, more preferably 0.05 to 0.25 mm, most preferably 0.05 to 0.1 mm.

Generally, the thickness of the base plate which may in particular form a bipolar plate is in the range of from 0.5 to 5 mm, preferably 0.8 to 4 mm. Most preferably, the base plate is fluid-tight. The base plate should have high electrical conductivity as an ohmic loss in the plate will reduce the overall assembly efficiency.

The structure of the fist metal sheet layer may be subject to variation. In the following, selected embodiments are described in more detail.

In an embodiment, the first metal sheet layer may comprise individual pillars or columns spaced from each other, having an axis being perpendicular to its plane and being connected to some support structure that also forms part of the first metal sheet layer. In order to improve mechanical and electrical contact to the adjacent layers, i.e., to the second metal sheet layer and/or the base plate, the columns preferably may have conical or trumpet-shaped widenings on either side. If the columns have conical or trumpet-shaped widenings on both sides, hourglass-shaped columns are formed.

Alternatively, the first metal sheet layer may comprise essentially parallel ribs spaced from each other so that channels are formed which are confined by the ribs, the base plate and the porous second metal sheet layer.

The channels may run across one face of the first metal sheet layer from one side to the other, i.e., have a first opening at the side face of the first metal sheet layer and a second opening at the opposing side face of the first metal sheet layer. In order to improve mechanical and electrical contact to the adjacent layer, i.e., to the porous second metal sheet layer or the base plate, the ribs may preferably widen at their free ends. This may result in the flow cross section of the passageway being rounded.

The channels may have a height in a direction perpendicular to the plane of the first metal sheet layer and/or the base plate in the range of 0.5 to 5 mm, preferably 0.8 to 4 mm, more preferably 1 to 3 mm, most preferably 1.5 to 2.5 mm.

In an embodiment, the channels may run straight, single-curved or multi-curved.

The device produced in accordance with the invention comprises, in addition to the first metal sheet layer, serving as supporting layer, a porous second metal sheet layer. The process may particularly involve the use of a porous second metal sheet layer pre-fabricated by powder metallurgy from a second sheet-like green part or, in the alternative, a second sheet-like green part of the porous metal layer which can be placed on top of at least another sheet-like green part or metal sheet layer to form the stack. Subsequently, the green part or green parts can be debound and the parts can be sintered together, also bonding the individual layers or sheets.

Manufacture of the sheet-like green parts involves the mixing of a sinterable powder of titanium, titanium alloy and/or titanium hydride with a binder and forming the mixture into a sheet-like shape. In an embodiment one or more of the sheet-like green parts may be formed into a sheet-like shape by an extrusion process, by a layer-by-layer wise manner process, i.e., by an additive manufacturing method, by a casting process, by extrusion, by a powder-binder compacting process, such as press and sinter, by a tape casting process, by a calendering process, by a printing process or by a screen printing process.

When building the stack, e.g., the first sheet-like green part of the first metal sheet layer may be placed on an already densified second metal sheet layer. Subsequently, the stack may be subjected to debinding and sintering, thereby also bonding the sheets together. Care should be taken during debinding and sintering so that the quality of the joint between the first metal sheet layer and the porous second metal sheet layer is not affected by excessive shrinkage of the first sheet-like green part of the first metal sheet layer.

It is also possible to place the first sheet-like green part of the first metal sheet layer on the base plate or on a green part that will, after debinding and sintering, form the base plate . Onto the stack of the first sheet-like green part of the first metal sheet layer and the base plate, the second metal sheet layer, or a green part of the second metal sheet layer may be placed, and the three-layered stack may be subjected to debinding and sintering along with bonding.

During the sintering step, the molded green part will shrink essentially without affecting the shape of the molded part. The powder particles will fuse together and open space between the powder particles reduces or disappears. Hence, during sintering, the density of the product increases and the product shrinks. The density of the sintered part is depending on the particle size of the sinterable material and the sintering conditions and can be tailored to the specific needs of the part. By this means, in particular the porosity of the second metal sheet layer can be adjusted to the needs. While it is desired to form the first metal sheet layer as mechanically stable and rigid as possible, this layer must also include the voids or channel-like structures offering for a flow of fluids, in particular the liquid water therethrough for being transported to the porous second metal sheet layer and further on to the proton exchange membrane (PEM). In order to form a stable and mechanical load bearing layer, it is generally desired to densify the metal framework of a first metal sheet layer, that may be produced by powder metallurgical methods, to a high material density and low porosity. Yet, and on the other hand, one has to observe the shrinkage of the green parts involved in the co-sintering process, particularly the shrinkage in the respective in-plane directions. If the shrinking rates of the materials involved differ too much, this will lead to tension and in worst cases to warping of the intended to be flat structures. Hence, there should be a limited difference of shrinking ratios of the involved green parts which shall not exceed an absolute difference of 10% shrinking ratio. Preferably the difference should be significantly less. For to achieve this aim, it may be necessary to also form the first metal sheet layer with a certainly increased porosity rather than to a maximum densification ration. In any event, it is aimed for a porosity in the metal frame structure of the first metal sheet layer that surrounds the voids or channel-like structures to be at least equal to, preferably less than the porosity of the second metal sheet layer. Another approach might be to pre-sinter a first of the elements in a first step, thereby causing this element to already shrink to a certain extent, and to then add one or more of the further elements and finalize the sintering, thereby finally densifying also the pre-sintered part. When doing so, the difference in shrinkage that occurs during the final sintering can be reduced.

It is an advantage of the process and the element of the present invention that an isotropic microstructure and a part without any or at least with negligible tension can be obtained. On the mesoscale, the microstructure preferably is characterized by an equiaxed, uniform morphology and no layer-wise structures in the microstructure are obtained. The grain structure preferably does not show a preferential direction.

After the sintering step, aftertreatment of the parts or the stacked layered structure is possible and may be performed. In particular, the surface of the porous second metal sheet layer opposite the first metal sheet layer may be subjected to various aftertreatments. E.g., the surface of the porous second metal sheet layer opposite the first metal sheet layer may be treated by a smoothening process and/or a roughening process. A roughening treatment such as etching or blasting may serve to improve the adhesion of a catalyst coating that may be applied to the porous second metal sheet layer. A smoothening process such as polishing may serve to prevent damage to the PEM, once the porous second metal sheet layer is brought into intimate contact with the PEM. Also, the treatments may serve to remove unwanted superficial metal oxide films from the surface of the porous second metal sheet layer.

Finally, the porous second metal sheet layer at least in partial regions may be provided with a catalytic layer and/or a catalytic coating, preferably of nickel, platinum, gold, iridium or iridium oxide.

The invention is further illustrated by the accompanying drawings.
- Fig. 1: is a schematic cross-section of a possible embodiment of a structure manufactured with a method according to the invention;
- Fig. 2a: is a schematic cross-section of another possible embodiment of a structure manufactured with a method according to the invention;
- Figs. 2b, c: are schematic views to the plane indicated with the line A-A in Fig. 2a for two different possible designs of this possible embodiment;
- Figs. 3a, b: show microscopic images of a cross-section of a joining portion of the porous metal layer and the supporting layer manufactured with a method according to the invention and with having used a paste-like material at the joint; and
- Figs. 4a, b: show microscopic images of a cross-section of a joining portion of the porous metal layer and the supporting layer manufactured with a method according to the invention without having used a paste-like material at the joint.

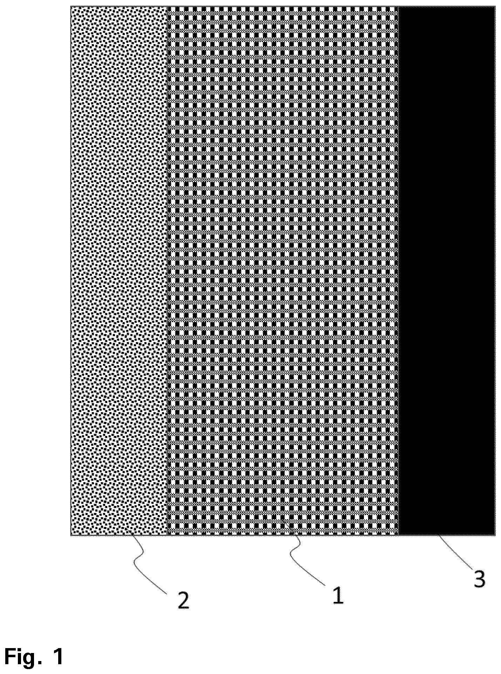

Fig. 1 shows a schematic sectional view to a structure that can be produced according to the method of the present invention. This structure, which in this embodiment is foreseen to serve as an electrode structure for PEM electrolyzer, comprises a porous metal layer 2, a supporting layer 1 and a bipolar plate 3. The supporting layer 1 corresponds to the first metal sheet layer, the porous layer 2 corresponds to the second metal sheet layer and the bipolar plate 3 in this embodiment is a particular realization of the base plate referred to in the general specification above. All related parts, the bipolar plate 3, the support layer 1 and the porous metal layer 2 may be made with powder metallurgical methods and are made of titanium or titanium alloy. They are further designated to be bonded in a sintering step when being manufactured according to a method of the present invention. In this regard, the layers support layer 1, the porous metal layer 2 and the bipolar plate 3 or respective green parts thereof, in fact at least one green part, are separately produced and arranged in a stack afterwards. The porous metal layer 2 is designed to contain micropores whereas the supporting layer 1 contains generally larger scaled pores or voids which form ducts to transport fluid and/or gaseous reaction products (educts).

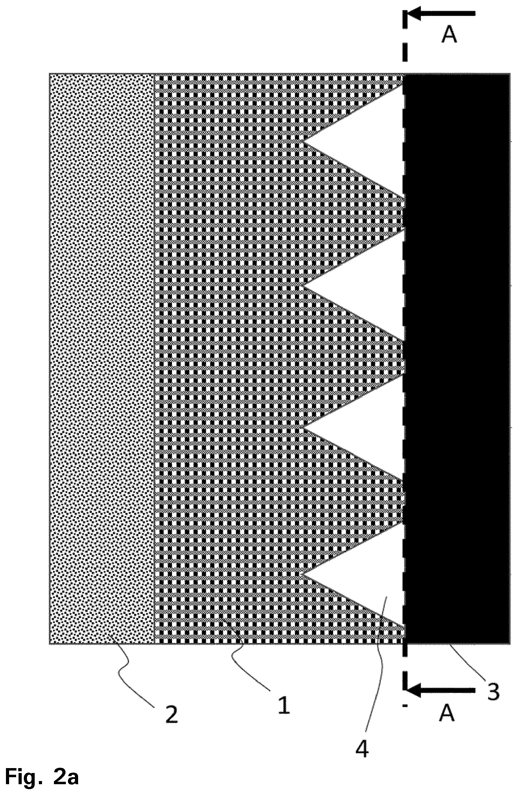

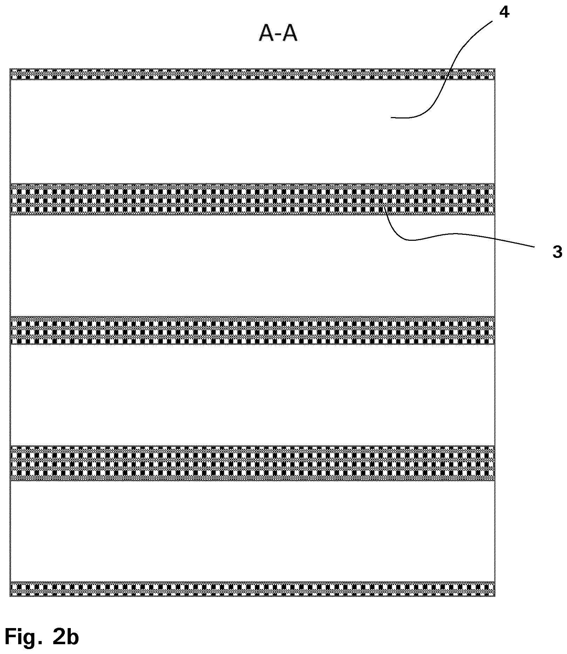

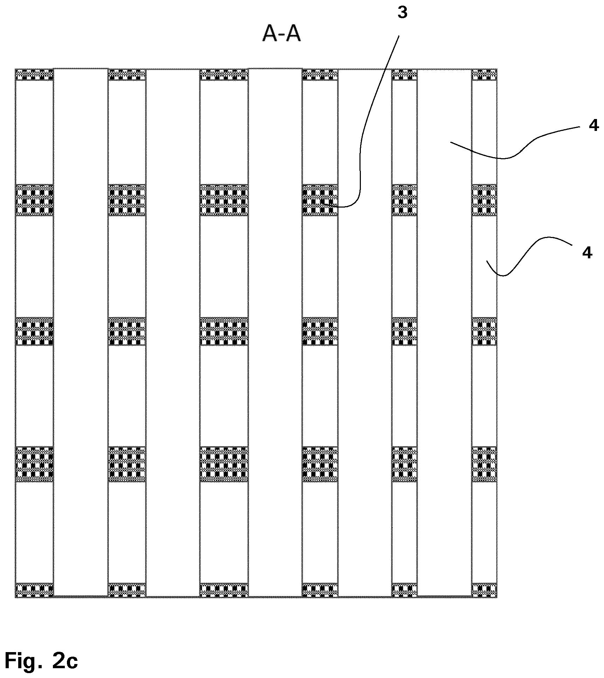

In Fig. 2a there is represented another possible design of a structure that can be produced according to the method of the present invention. In this embodiment, the supporting layer 1 is structured at its face directed towards the bipolar plate 3 and has a channel like structure which forms passageways 4 which run along the plane of the supporting layer 2. Figs. 2b and 2c show different possible ways to form such passageways represented by cut views from direction A as given in Fig. 2a. Whereas in Fig. 2b a possible embodiment is shown with rib-like structures of the supporting layer 2 that contact the bipolar plate 3 and are fixedly connected thereto and with channels running parallel through the plane. Fig. 2c shows the same view with rather point- or island-like contacts of the supporting layer 1 with the bipolar plate 3 and with channels crossing each other giving a net like structure. This results in pillar like structures supporting the layer 1 onto layer 3, such pillar like structures being supported by a base structure with forms part of the layer 1.

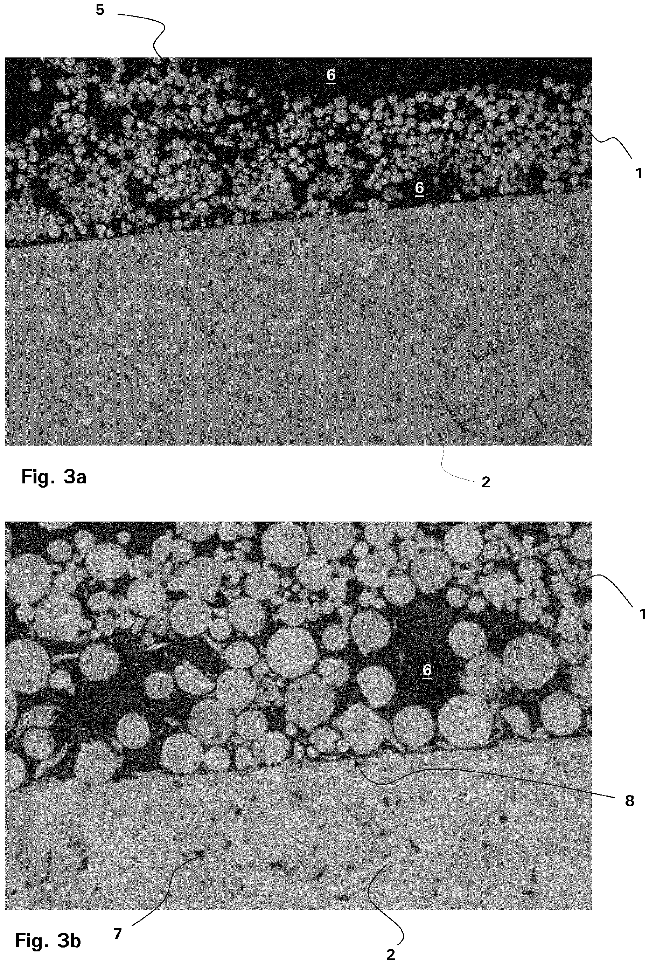

Figs. 3a and 3b show in microscopic images of different magnification the sintered structure of the porous metal layer 2 and a grid web of the supporting layer 1 said grid web forming some kind of metal framework 5. It can be seen that in the supporting layer 1 voids 6 or larger scale pores are formed within the metal structure and between the metal framework 5. The porous metal layer, to the contrast, contains plenty of smaller pores 7 which can also be referred to as micro-pores. The joint between the porous metal layer 2 and supporting layer 1 at the boundary 8 is formed by a sintered connection wherein for producing the structure as depicted in Figs 3a and 3b a paste-like material containing binder and powder of titanium, titanium alloy or titanium hydride had been applied to the surface of the porous metal layer 2 which had been pre-sintered before adding the structure of the supporting layer 1 and sintering it together with the paste-like material and the porous metal layer 2 to obtain the firm connection at the boundary 8. The connection at the boundary can be observed to be firm and well established over the contact area. Here it can also be seen that by selectively positioning the material when forming the first sheet-like green part from which the supporting layer 1 is gained by sintering a grid like structure with metal framework 5 and voids 6 is construed.

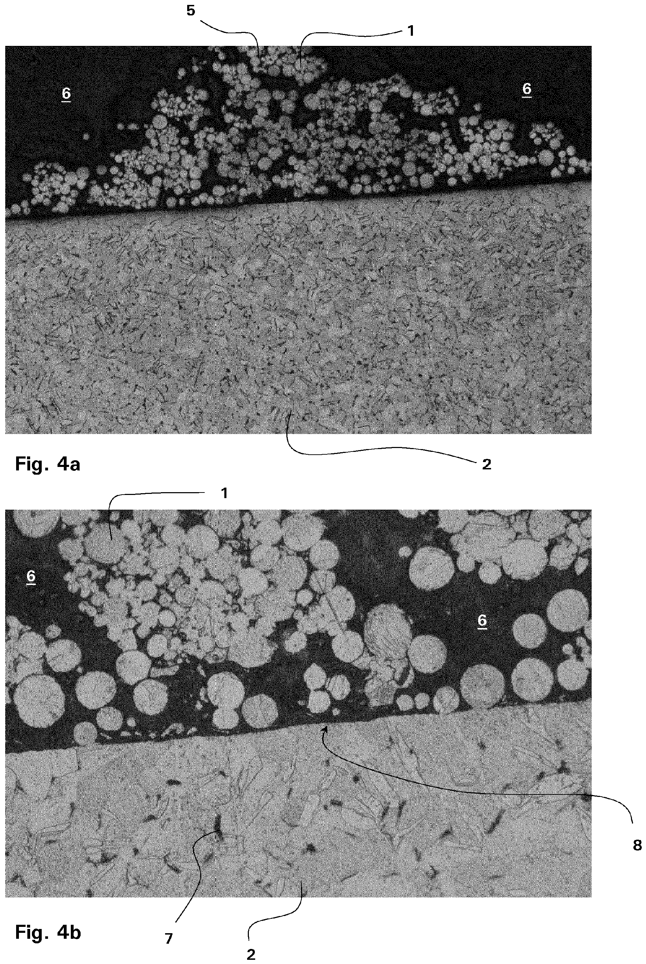

Figs 4a and 4b show similar microscopic images in different magnification of a sintered structure of the of the porous metal layer 2 and a grid web of the supporting layer 1. The general structure is quite the same as the one as shown in and described with respect to Figs. 3a and 3b above. Hence, it may be referred to the above description which generally also applies to Figs. 4a and 4b. The main difference is that for producing the material shown in Figs. 4a and 4b no paste-like material containing binder and titanium, titanium alloy and/or titanium hydride powder was applied to the boundary 8 prior to finally sintering and during such sintering binding the parts. While there can be seen a difference of the contacts at the boundary 8, the joint could still be found firm and well established over the contact area.

### List of Reference Signs

- 1: porous metal layer
- 2: supporting layer
- 3: bipolar plate
- 4: passageway
- 5: metal framework
- 6: void
- 7: pore
- 8: boundary

## Claims

1. Method for producing layered sheet structures from titanium or titanium alloy metal for use in or as electrodes of PEM-type electrolyzers and/or fuel cells comprising the following steps:
a) providing a first sheet-like green part that is formed from a powder of titanium metal, titanium alloy metal and/or titanium hydride and from at least one binder material by selectively positioning material and leaving voids or open spaces therebetween, said first sheet-like green part being a green part of a first metal sheet layer,
or providing a first metal sheet layer comprising a metallic frame structure including voids or open spaces,
b) providing a second sheet-like green part that is formed from a powder of titanium metal, titanium alloy metal and/or titanium hydride and from at least one binder material, said second sheet-like green part being a green part of a second, porous metal sheet layer,
or providing a second metal sheet layer in the form of a porous metal sheet layer,
c) forming a stack comprising
i. the first sheet-like green part and the second sheet-like green part or
ii. the first sheet-like green part and the second metal sheet or
iii. the first metal sheet and the second sheet-like green part,
d) debinding the green part or green parts and sintering the stack to densify the green part or green parts contained therein and to simultaneously bond the metal sheet layers of the stack.

2. Method according to claim 1 comprising, prior to step d) a step of debinding and densifying in a sintering step one of the first or second green parts to form one of the first or second metal sheet layers.

3. Method according to any of claims 1 or 2, wherein the first sheet-like green part comprises openings between the selectively positioned material or in that the first sheet-like green part between the selectively positioned material comprises structures forming open space conducts running in the plane of the first sheet-like green part.

4. Method according to any of the preceding claims further including providing a, preferably fluid-tight, titanium or titanium alloy base plate or a third sheet-like green part, said third sheet-like green part being formed from a powder of titanium metal, titanium alloy metal and/or titanium hydride and from at least one binder material and being a green part of the titanium or titanium alloy base plate, and, when forming the stack in step d), arranging the base plate or the third sheet-like green part in contact with the surface of the first sheet-like green part or of the first metal sheet layer and opposite the second sheet-like green part or the second metal sheet layer.

5. Method according to any of the preceding claims, wherein forming the stack in step d) is achieved by stacking layers or parts that were previously formed in separate process steps.

6. Method according to any of the preceding claims, wherein, when forming the stack in step c) a paste-like material is applied to at least a part of at least one joining surface of one of the sheet-like green parts and/or the metal sheet layers involved, said paste-like material comprising a powder of titanium metal, titanium alloy metal and/or titanium hydride and further comprising at least one binder material.

7. Method according to claim 6, wherein the powder contained in the paste-like material has a ratio of surface to volume ≥ 0.1 *µ*m⁻¹.

8. Method according to any of claims 6 or 7, wherein the powder contained in the paste-like material has a particle size d₉₀ ≤ 50 µm, preferably ≤ 30 *µ*m, in particular ≤ 25 *µ*m.

9. Method according to any of claims 6 to 8, wherein the powder contained in the paste-like material contains residual oxygen of maximum 0.4, preferably of maximum 0.3, weight percent.

10. Method according to any of the preceding claims, wherein the powder for forming the green parts has a particle size d₉₀ ≤ 300 *µ*m, preferably ≤ 150 *µ*m, more preferably ≤ 90 *µ*m, in particular ≤ 65 *µ*m, most preferably ≤ 45 *µ*m.

11. Method according to any of the preceding claims, wherein, when the stack formed in step c) contains green parts with respective surfaces facing each other, which green parts expose a shrinkage during debinding and sintering, the values of shrinkage of the respective green parts in respectively corresponding directions of the planes of the sheet-like parts differs by less than 10 %.

12. Method according to any of the preceding claims, wherein the green parts are formed by one or more of the following processes:
• extrusion,
• casting,
• tape casting
• calendaring,
• printing,
• screen printing,
• Powder-binder compacting process.

13. Method according to any of the preceding claims, wherein the thickness of the second sheet-like metal layer is in the range of from 0.01 mm to 2 mm, preferably from 0.05 mm to 1 mm, more preferably from 0.08 mm to 0.7 mm, most preferably from 0.1 mm to 0.5 mm.

14. Method according to any of the preceding claims, wherein the thickness of the first sheet-like metal layer is in the range of from 0.5 mm to 5 mm, preferably from 0.8 mm to 4 mm, more preferably from 1 mm to 3 mm, most preferably from 1.5 mm to 2.5 mm.

15. Method according to claim 3 or to any other claim directly or indirectly referring back to claim 3, wherein the thickness of the base plate is in the range of from 0.5 mm to 5 mm, preferably from 0.8 mm to 4 mm.
